# EUROPEAN PATENT APPLICATION

(11) **EP 4 101 900 A1**
(43) Date of publication of application: **14.12.2022**
(21) Application number: 21178730.4
(22) Date of filing: 10.06.2021
(51) Int. Cl.: C09C 1/50

(54) **SUSTAINABLE CARBON BLACK FORMATION**

(71) Applicant: Orion Engineered Carbons GmbH, 60528 Frankfurt am Main (DE)
(72) Inventor: SCHINKEL, Arndt-Peter, 56112 Lahnstein (DE); TIMMERMANS, Eddy, 50354 Hürth (DE); MERGENTHALER, Pieter, 10551 Berlin (DE); DETERS, Dieter, 53173 Bonn (DE)
(74) Representative: f & e patent

(57) **Abstract**

The present invention relates to a reactor as well as a method for manufacturing carbon black. Hydrogen is used as the carrier gas as well as fuel that enhance the yield of carbon black. Moreover, a plasma can be applied downstream the evaporation zone or downstream of the feedstock injection in case of a gaseous feedstock of a carbon black reactor system to generate hydrogen radicals and hydrogen ions that further enhance the carbon black formation.

## Description

### TECHNICAL FIELD

The present invention relates to a reactor as well as a method for manufacturing carbon black. Hydrogen is used as the carrier gas as well as fuel that enhance the yield of carbon black. Moreover, a plasma can be applied downstream the evaporation zone or downstream of the feedstock injection in case of a gaseous feedstock of a carbon black reactor system to generate hydrogen radicals and hydrogen ions that further enhance the carbon black formation.

### TECHNICAL BACKGROUND

Standard carbon black formation uses air as carrier gas. Approximately 50 % of exergy of the input streams can be converted to carbon black. Currently, 50 % of the exergy is either destructed or converted to low calorific gas stream and utilized in a Clausius Rankine process with very low efficiencies. The high content of inert gases like nitrogen makes the use of the tail gas economically unattractive.

The carbon black formation can be separated into different process steps including raising the temperature of the feedstock up to pyrolysis temperature (and evaporation of the feedstock, if the feedstock is a liquid), pyrolysis of the feedstock to unsaturated species such as acetylene and aromatic containing intermediate products, nuclei formation, surface growing, and aggregation.

Sustainable carbon black feedstocks (i.e. feedstock for carbon black), such as aliphatic oils, renewable carbon black feedstocks and biomass-based feedstocks, have a high content of aliphatic C-C bonding and a low content of aromatic C-C bonding. The aliphatic C-C bonding is weak in comparison to the C-H bonding or aromatic C-C bonding. Hence, predominantly the C-C bonding of sustainable carbon black feedstocks is destroyed where the C-H bonding scission is preferred to obtain unsaturated species for the formation of carbon black.

Accordingly, it is desired to provide a method and a reactor system for the formation of carbon black that overcomes the aforementioned problems. Particularly, it is desired to provide a method and a reactor system for the formation of carbon black where the tail gas can be easily separated and reused as a carrier gas or utilized as high calorific gas stream. Moreover, it is desired to positively affect the formation of carbon black and to use sustainable carbon black feedstocks.

Surprisingly, it has been found that hydrogen (H₂) can be used as fuel and carrier gas in a method and a reactor system for the formation of carbon black, particularly in a furnace process or reactor system, and thus, substitute the air stream in conventional carbon black manufacturing processes. Hydrogen increases the level of hydrogen radicals in the fluegas and accelerate the pyrolysis reaction of the feedstock. Speeding up the pyrolysis reaction reduces the effect of back mixing of the gas flow. This increases the amount of nuclei formation and thus, increasing the yield of the carbon black. Furthermore, the increased amount of hydrogen radicals allows the usage of sustainable carbon black feedstock, such as biomass-based feedstock, aliphatic oils, or aliphatic materials in general.

Moreover, the tail gas generally comprises hydrogen, CO, CO₂ and water and it was found that the hydrogen can be separated from the tail gas and reused as carrier material, utilized as high calorific gas stream or used as a synthesis gas for the Fischer-Tropsch process.

The formation of carbon black, particularly using sustainable carbon black feedstock, could be further positively affected by using a plasma to generate hydrogen radicals and hydrogen ions. The treatment with the hydrogen radicals and hydrogen ions should be applied downstream of the evaporation zone of the reactor in case of liquid feedstocks or downstream the feedstock injection in case of gaseous feedstocks.

### SUMMARY OF THE INVENTION

The present invention relates to a method for producing carbon black comprising (a) injecting a first fluid with an injection means into a combustion chamber of a reactor, (b) supplying a second fluid through a conduit into the combustion chamber, (c) mixing the second fluid and the first fluid to obtain a combustion mixture, (d) combusting the combustion mixture in a combustion chamber to produce hot combustion gases, (e) receiving the hot combustion gases in a reaction chamber of the reactor subsequent to the combustion chamber, (f) injecting a feedstock for carbon black into the hot combustion gases received from the combustion chamber to obtain a hot reaction mixture comprising the feedstock for carbon black, and (g) reacting the hot reaction mixture in the reaction chamber to obtain a hot product mixture comprising carbon black, wherein the first fluid is oxygen-containing gas and the second fluid is hydrogen or the first fluid is hydrogen and the second fluid is oxygen-containing gas.

Furthermore, the present invention relates to a reactor system for producing carbon black comprising a carbon black reactor comprising (i) a combustion chamber for producing hot combustion gases by combustion of a combustion mixture comprising oxygen-containing gas and hydrogen, (ii) a conduit for supplying a second fluid to the combustion chamber, (iii) an injection means for injecting a first fluid into the combustion chamber, and (iv) a reaction chamber subsequent to the combustion chamber, comprising means to inject a feedstock for carbon black (I) into the hot combustion gases received from the combustion chamber to form carbon black, wherein the first fluid is oxygen-containing gas and the second fluid is hydrogen or the first fluid is hydrogen and the second fluid is oxygen-containing gas.

Moreover, a carbon black is provided that is produced according to the method of the present invention and/or using the reactor system according to the invention. It has been found that a combustion mixture comprising oxygen-containing gas and hydrogen and/or hot combustion mixture comprising hydrogen can be used for producing carbon black and that hydrogen can be used as carrier gas and/or fuel for producing carbon black.

### BRIEF DESCRIPTION OF THE DRAWINGS

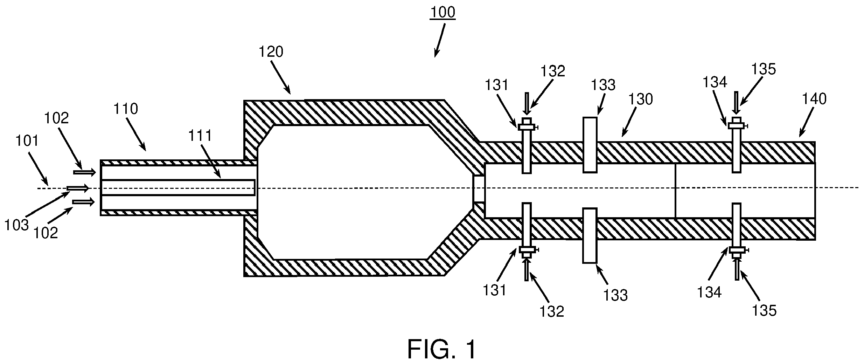

- Figure 1:: Reactor for the production of carbon black including a plasma device downstream of the injection zone.

### DETAILED DESCRIPTION

As mentioned above, the present invention relates to a method and a reactor system for the production of carbon black, a produced carbon black and the use of a combustion mixture comprising hydrogen and oxygen-containing gas/hot combustion mixture comprising hydrogen as well as the use of hydrogen for the production of carbon black. The present invention is described with reference to the accompanying figure, which do not limit the scope and ambit of the invention. It must be noted that, as used in the specification and the appended claims, the singular forms "a," "an" and "the" include plural referents unless the context clearly dictates otherwise. Thus, for example, reference to "an oxygen-containing gas" includes mixtures of oxygen-containing gases, reference to "a fuel" includes mixtures of two or more such fuels, and the like. Hydrogen refers to molecular hydrogen or dihydrogen, i.e. H₂.

The method for producing carbon black comprises the steps (a) injecting a first fluid with an injection means into a combustion chamber of a reactor, (b) supplying a second fluid through a conduit into the combustion chamber, (c) mixing the second fluid and the first fluid to obtain a combustion mixture, (d) combusting the combustion mixture in a combustion chamber to produce hot combustion gases, such as hot hydrogen-containing combustion gases, (e) receiving the hot combustion gases in a reaction chamber of the reactor subsequent to the combustion chamber, (f) injecting a feedstock for carbon black into the hot combustion gases received from the combustion chamber to obtain a hot reaction mixture comprising the feedstock for carbon black, and (g) reacting the hot reaction mixture in the reaction chamber to obtain a hot product mixture comprising carbon black, wherein the first fluid is oxygen-containing gas and the second fluid is hydrogen or the first fluid is hydrogen and the second fluid is oxygen-containing gas. Thus, the combustion mixture comprises oxygen-containing gas and hydrogen.

The method utilizes hydrogen as a carrier material as well as fuel for the production of carbon black. Conventional carbon black processes use natural gas, fuel oil, or other gaseous or liquid hydrocarbons. Generally, the fuel and oxygen-containing gas are supplied to the combustion chamber in an amount that result in the complete combustion of the fuel. Typically, air is used as oxygen-containing gas to provide oxygen for the combustion of the fuel and air is also used as a carrier material for producing carbon black. The drawback of using air as carrier material is that the resulting tail gas cannot be separated or used in another process. By using hydrogen as carrier material as well as fuel, it is possible to separate the remaining hydrogen from the tail gas to resupply the hydrogen as the first or second fluid to the combustion chamber, to obtain a high calorific gas stream that can be used in further processes, or use hydrogen or hydrogen/CO as a synthesis gas. At the same time, hydrogen beneficially affect the production of carbon black. The yield as well as the uniform characteristics of the carbon black can be increased by using hydrogen as carrier material. Particularly, the yield of carbon black can be increased even if sustainable carbon black feedstocks, aliphatic oils, renewable feedstock material or biomass-based feedstocks are used. Without being bound by theory, it is assumed that hydrogen radicals and/or hydrogen ions are formed that improve the pyrolysis acceleration and the nuclei formation. Moreover, it is assumed that the C-H scission is accelerated by a bi or tri molecular reaction using hydrogen as carrier material. Accelerating the C-H scission will suppress the undesired C-C cleavage. Accordingly, the pyrolysis of the feedstock to unsaturated species like acetylene and aromatic containing intermediate products can be improved that results to higher yields and uniform characteristics of the carbon black.

The hydrogen and the oxygen-containing gas can be either supplied via the injection means or a conduit to the combustion chamber. It is preferred that the first fluid is oxygen-containing gas and the second fluid is hydrogen so that the oxygen-containing gas is supplied through the injection means and the hydrogen is supplied through the conduit. For instance, the oxygen-containing gas (first fluid) can be subjected to the combustion chamber by a lance extending through the conduit with a gap between the inner surface of the conduit and the outer surface of the lance defining a passageway for the second fluid that is the hydrogen (second fluid).

The oxygen-containing gas is generally supplied in an amount that does not yield an excess of oxygen with respect to the amount of oxygen for a complete combustion of the fuel. In other words, it is desired that the hydrogen is supplied in an amount yielding a molar excess of hydrogen with respect to the amount of oxygen so that the hydrogen (fuel) is not completely combusted and thus, present in the hot combustion mixture as well as hot reaction mixture. The oxygen-containing gas is supplied in an amount that the k-value higher than 1, preferably 1.1 to 2000, 2 to 100, 3 to 50, 4 to 40, 5 to 30, and/or 6 to 20. Where the k value is defined by the ratio of stoichiometric O₂ amount that is necessary for the complete stoichiometric combustion of the fuel to the supplied O₂ amount.

The molar ratio of hydrogen to oxygen-containing gas in the combustion mixture is 100000/1 to more than 1/1, such as 10000/1 to more than 1/1, 5000/1 to 1.1/1, 2000/1 to 2/1, 30/1 to 2/1, 25/1 to 2/1, 20/1 to 2/1, or 15/1 to 2/1. The molar ratio of oxygen-containing gas in the combustion mixture to hydrogen is 0,000001/1 to less than 1/1, such as 0,00001/1 to less than 1/1, 0,0005/1 to 0.1/1, 0,002/1 to 0,02/1, 0,002/1 to 0,2/1, 0,25/1 to 1/2, 0,2/1 to 1/2, or 0.15/1 to 1/1.1.

The molar ratio of 2/1 or more is preferred to achieve maximum efficiency. A molar ratio of 4/1 or 5/1 avoids an oxidizing flame. However, higher molar ratios are also particularly beneficial since the remaining hydrogen is used as carrier gas. It is possible to adjust the properties, such as the surface properties, of the carbon black by adjusting the amount of oxygen-containing gas in the combustion mixture and thus, the amount of the produced water.

The oxygen-containing gas (O₂ containing gas or O₂ containing gas mixture) can be air, oxygen-enriched air, other oxygen containing gases and/or pure oxygen (O₂). Preferably the oxygen-containing gas is oxygen-enriched air or O₂ and most preferably the oxygen-containing gas is O₂. The wt.-% of oxygen that is present in the oxygen-containing gas should be 20 to 100 wt.-%, preferably 50 to 99 wt.-%, more preferably 60 to 95 wt.-% and most preferably 70 to 90 wt.-%, wherein the wt.-% is based on the total weight of the oxygen-containing gas. High levels of oxygen in the oxygen-containing gas are preferred in order to ensure that the tail gas comprises the lowest possible content of low calorific gas as possible.

Typically, the oxygen-containing gas is preheated before entering the combustion chamber to a temperature of 500 to 2400 °C, preferably 500 to 2000 °C, 500 to 1400 °C, 500 °C to 1300 °C, 500 to 1250 °C, 500 to 1200 °C, 500 to 1100 °C, 600 to 900 °C, or 750 to 950 °C, and then, mixed with the fuel, i.e. hydrogen, that is preferably also preheated.

Typically, the hydrogen is preheated before entering the combustion chamber to a temperature of 500 to 2400 °C, preferably 500 to 2000 °C, 500 to 1400 °C, 500 °C to 1300 °C, 500 to 1250 °C, 500 to 1200 °C, 500 to 1100 °C, 600 to 900 °C, or 750 to 950 °C, and then, mixed with the oxygen-containing gas, that is preferably also preheated.

Typically, the hydrogen as well as the oxygen containing gas are preheated before entering the combustion chamber to a temperature of 500 to 2400 °C, preferably 500 to 2000 °C, 500 to 1400 °C, 500 °C to 1300 °C, 500 to 1250 °C, 500 to 1200 °C, 500 to 1100 °C, 600 to 900 °C, or 750 to 950 °C, and then, mixed.

The preheating of the oxygen-containing gas and hydrogen can be done electrically or using a heat exchanger. Preheating the hydrogen and/or the oxygen containing gas is particularly preferred since less energy needs to be generated from the combustion of the hydrogen. Typically, temperatures for the combustion are 1300 °C to 3000 °C, such as 1400 to 2200 °C, or 1300 to 1600 °C, or 1300 to 2400 °C, most preferably 1300 to 2400 °C, wherein the temperature of the hot combustion mixture should be greater than the temperature of the preheated oxygen-containing gas and/or hydrogen. For instance, preheating the hydrogen and oxygen containing gas to 1300 °C require only a small amount of oxygen-containing gas to combust the hydrogen in order to increase the temperature to e.g. 1600 °C. The produced hot combustion mixture is then subjected to the reaction chamber where the feedstock is injected to the hot combustion chamber. Injecting feedstock into the hot combustion mixture cools the resulting hot reaction mixture to the desired temperature. Accordingly, the temperature of the hot reaction mixture can be adjusted by the amount of feedstock injected to the hot combustion mixture.

Furthermore, another benefit of preheating, and thus, a lower required amount of oxygen-containing gas, is that the hot combustion mixture as well as the hot reaction mixture comprises less water (H₂O). Water has an influence of the surface properties of the produced carbon black. Accordingly, it is possible that the amount of oxygen-containing gas, such as O₂, in the combustion mixture is used to control the amount of water in the hot combustion mixture and/or hot reaction mixture and thus, preferably control the surface properties of the produced carbon black.

The hydrogen that is injected in step (a) or supplied in step (b) can be compressed hydrogen and the absolute pressure of the compressed hydrogen is preferably 1.1 to 2,000 bar, such as 2 to 1,000 bar, 3 to 200 bar, or 4 to 100 bar. Compressed hydrogen has an increase the energy density. It is also according to the invention to introduce liquid hydrogen into the combustion chamber. The liquid hydrogen can be mixed with the oxygen-containing gas and combusted in the combustion chamber.

The inventive method can comprise additional method steps. The method can include (h) quenching the hot product mixture, preferably using a quenching medium, such as water, in a quenching chamber of the reactor to obtain a quenched reaction mixture. However, a quenching boiler or a heat exchanger can also be used to quench the hot product mixture.

Furthermore (i) the carbon black can be obtained from the hot reaction mixture and/or quenched reaction mixture and a tail gas mixture comprising H₂O, H₂, CO and CO₂. It is also possible that said tail gas mixture comprises H₂O, H₂, and CO. In that case, a separation of CO₂ and H₂ can be omitted if a synthesis gas comprising H₂ and CO is desired as described below.

The tail gas should be reprocessed before the hydrogen is separated. The CO that is present in the tail gas should be converted to CO₂ (step j). The conversion can be done using a water-gas shift reaction, wherein CO and water reacts to CO₂ and H₂. A water-gas shift reaction is well known and is used in the manufacture of ammonia, hydrocarbons, methanol, and hydrogen. It is also often used in conjunction with steam reforming of methane and other hydrocarbons.

Water that is present in the tail gas, before or after step (k), can be condensed (step k) and thus, removed from the tail gas.

The hydrogen can be separated from the tail gas. The separation can be done using pressure swing adsorption techniques to separate H₂ and CO₂. Accordingly, CO₂ and H₂ present in the tail gas mixture can be separated (step I). It is preferred that separation occurs after steps (j) and (k).

The separated hydrogen can be provided as the first or second fluid to the combustion chamber of a reactor according to step (a) or (b) (step m). Preferably, the hydrogen is provided as the second fluid. Recycling the hydrogen in the method according to the invention further improve the sustainability of the carbon black production.

The separated hydrogen can also be collected and/or provided to a fuel cell that provides electrical energy. The electrical energy can be used to drive pumps or for the aforementioned preheating to increase the sustainability of the carbon black production.

Moreover, the shift or conversion of CO to CO₂ can be omitted so that after the aforementioned separation a hydrogen/CO mixture is obtained that can be collected and used as synthesis gas. For instance, a hydrogen/CO mixture can be used in the Fischer-Tropsch process to convert the mixture into aliphatic products. The aliphatic products can then be used as feedstock material for the production of carbon black to increase the sustainability of the process. The molar ratio of hydrogen to CO of should be from 5/1 to 1.5/1, such as 4/1 to 2/1.

It is particularly preferred that the hot combustion gases comprise H₂ and H₂O. Hot combustion gases are produced after the combustion of the combustion mixture comprising oxygen-containing gas and hydrogen. It is possible that small amounts of oxygen can be present in the hot combustion gases after the combustion. However, it is desired that the level of oxygen is as low as possible. Moreover, it is desired that the hot combustion gases are free of nitrogen or comprises less than 1,000 ppm of nitrogen. The hot combustion gases will comprise hydrogen if the molar oxygen content is lower than the molar hydrogen content in the combustion mixture.

It is preferred that the hot combustion gases comprise 2 to 90 wt.-% of hydrogen, such as 5 to 60 wt.-%, 2 to 80 wt.-%, 10 to 70 wt.-%, 30 to 50 wt.-%, or 15 to 40 wt.-%, based on the total weight of the hot combustion gases. The hot combustion gases can comprise 10 to 95 mol.-%, such as 20 to 90 mol.-%, 30 to 80 mol.-%, 40 to 70 mol.-%, 20 to 60 mol.-%, or 25 to 50 mol.-%, of hydrogen, based on the total molar amount of the hot combustion gases.

Moreover, the hot combustion gas and/or the hot reaction mixture can comprise H radicals and/or H+ Ions derived from hydrogen. The hydrogen radicals and H+ Ions accelerate by a bi or tri molecular reaction the C-H bonding scission during the pyrolysis of the feedstock material. Accordingly, it is possible improve the pyrolysis to unsaturated species like acetylene and aromatic containing intermediate products and thus, improve the yield of carbon black.

Accordingly, the hot reaction mixture can comprise H₂O, H₂ and a feedstock for carbon black. The hot product mixture can comprise H₂O, H₂, carbon black, CO and CO₂. The quenched reaction mixture can comprise H₂O, H₂, carbon black, CO and CO₂. The carbon black can be separated from the hot product mixture or the quenched reaction mixture. The remaining gases are considered as tail gas.

The carbon black feedstock (i.e. feedstock for carbon black) can be or can comprise a non-aromatic feedstock, an aromatic feedstock, aliphatic feedstock, aliphatic oil, sustainable feedstock, renewable carbon black feedstock and/or a bio-based feedstock. Accordingly, the carbon black feedstock is not limited to renewable carbon black feedstock, sustainable feedstock and/or a bio-based feedstock.

Preferably the aliphatic feedstock comprises aliphatic materials in a high amount such as 20 to 100 wt.-%, such as 40 to 100 wt.-%, 50 to 99 wt.-%, 60 to 95 wt.-%, or 80 to 90 wt.-%, of the feedstock for carbon black is derived from aliphatic feedstock, based on the total weight of the feedstock for carbon black. Sustainable feedstock, renewable carbon black feedstock and/or a bio-based feedstock often comprise a high content of aliphatic feedstock as mentioned above.

Sustainable carbon black feedstocks refer to feedstocks that have generally a high content of aliphatic C-C bonding and preferably a low content of aromatic C-C bonding. Sustainable carbon black feedstocks can include aliphatic oils, renewable carbon black feedstock, and biomass-based feedstocks. Biomass-based feedstocks, sustainable carbon black and/or renewable carbon black feedstock can be distinguished from fossil-based feedstock by measuring the C14 content in the feedstock (Radiocarbon dating). The relative amount of C14 atoms compared to C12 (C14 to C12 ratio) is lower in fossil-based feedstock in comparison to biomass-based feedstocks.

Preferably, the carbon black feedstock is renewable carbon black feedstock. The renewable carbon black feedstock can comprise a plant-based feedstock, preferably a non-edible plant-based feedstock and/or a waste plant-based feedstock. As used herein, the term "non-edible" refers to materials that are suitable for human consumption. The term "waste" refers to materials that are discarded or disposed of as unsuitable or no longer useful for the intended purpose, e.g., after use. With respect to edible oils, i.e., cooking oils, used cooking oils are considered waste.

The renewable carbon black feedstock may comprise solid components and/or liquid components. Preferably, the renewable carbon black feedstock may comprise liquid components.

The renewable carbon black feedstock preferably may comprise plant-based oils and more preferably non-edible plant-based oils and/or waste plant-based oils.

The renewable carbon black feedstock according to the present invention may comprise wood, grass, cellulose, hemicellulose, lignin, waste material comprising natural rubber and/or synthetic rubber obtained from a renewable source material, black liquor, tall oil, rubber seed oil, tobacco seed oil, castor oil, pongamia oil, crambe oil, neem oil, apricot kernel oil, rice bran oil, cashew nut shell oil, cyperus esculentus oil, cooking oil, distillation residues from biodiesel plants or a mixture or combination of any of the foregoing.

As used herein, the term "wood" refers to porous and fibrous structural tissue found in the stems and roots of trees and other woody plants. Suitable examples of wood include, but are not limited to, pine, spruce, larch, juniper, ash, hornbeam, birch, alder, beech, oak, pines, chestnut, mulberry or mixtures thereof. Suitable examples of grass include, but are not limited to, cereal grass, such as maize, wheat, rice, barley or millet; bamboos and grass of natural grassland and species cultivated in lawns and pasture. Suitable examples of lignin may include, but are not limited to, lignin removed by Kraft process and lignosulfonates. Waste materials comprising natural rubber and/or synthetic rubber obtained from a renewable source material may be tires, cable sheaths, tubes, conveyor belts, shoe soles, hoses or mixtures thereof. Natural rubber may be derived from rubber trees (Helvea brasiliensis), guayule, and dandelion. Synthetic rubber may include styrene-butadiene rubber such as emulsion-styrene-butadiene rubber (ESBR) and solution-styrene-butadiene rubber (SSBR), polybutadiene, polyisoprene, ethylene-propylene-diene rubber (EPDM), ethylene-propylene rubber (EPM), butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or a mixture or combinations of any of the foregoing. Synthetic rubber, such as polybutadiene, may be produced from alcohol obtained through fermentation of plant biomass. Suitable preparation of alcohol obtained through fermentation and preparation of polybutadiene from such alcohol is described in EP 2 868 697 A1.

As used herein, the term "cooking oil" refers to edible oils used in food preparation, such as in frying, baking and other types of cooking. According to the present invention, cooking oils may comprise rice bran oil, rapeseed oil, linseed oil, palm oil, coconut oil, canola oil, soybean oil, sunflower oil, cotton seed oil, pine seed oil, olive oil, corn oil, grape seed oil, safflower oil, acai palm oil, jambú oil, sesame oil, chia seed oil, hemp oil, perilla oil, peanut oil, stillingia oil, cashew nut oil, brazil nut oil, macadamia nut oil, walnut oil, almond oil, hazel nut oil, beechnut oil, candlenut oil, chestnut oil or a mixture or combination of any of the foregoing. The cooking oil of the present invention may be used cooking oil. As used herein, the term "used cooking oil" refers to oils originating from commercial or industrial food processing operations, such as restaurants, that have been used for food preparation, such as cooking or frying.

Solid components may be selected from, but are not limited to, wood, grass, cellulose, hemicellulose, lignin, waste material comprising natural rubber and/or synthetic rubber obtained from a renewable source material or a mixture or combination of any of the foregoing.

Liquid components may be selected from, but are not limited to, black liquor, tall oil, rubber seed oil, tobacco seed oil, castor oil, pongamia oil, crambe oil, neem oil, apricot kernel oil, rice bran oil, cashew nut shell oil, cyperus esculentus oil, cooking oil, distillation residues from biodiesel plants or a mixture or combination of any of the foregoing. Some oils may be solid at room temperature, e.g., at temperatures of 25 °C, but liquid at elevated temperatures, such as temperatures above 25 °C, e.g., temperatures in a range of 25 to 100 °C. As used herein, the term "black liquor" refers to a by-product from the Kraft process which comes from the sulfate and soda processes of making cellulosic pulp.

Non-edible plant-based feedstock may comprise, but is not limited to, wood, cellulose, hemicellulose, lignin, black liquor, tall oil, rubber seed oil, tobacco seed oil, castor oil, pongamia oil, crambe oil, neem oil, apricot kernel oil, rice bran oil, cashew nut shell oil, cyperus esculentus oil, distillation residues from biodiesel plants, waste materials comprising natural rubber and/or synthetic rubber obtained from a renewable source material or a mixture or combination of any of the foregoing.

Waste plant-based feedstock may comprise, but is not limited to, waste material comprising natural rubber and/or synthetic rubber obtained from a renewable source material, used cooking oils or a mixture or combination of any of the foregoing.

The carbon black feedstock may comprise tall oil. The terms "tall oil" and "crude tall oil" may be used interchangeably throughout this description unless otherwise stated. Tall oil is derived from the chemical pulping of woods. Typically, tall oil is a mixture comprising resin acids, fatty acids, sterols, alcohols and further alkyl hydrocarbon derivatives. Tall oil may be a natural unrefined product or a refined product. Refined tall oil may include tall oil fatty acid, tall oil fatty rosin, distilled tall oil and tall oil pitch. Tall oil can be distilled to obtain tall oil resin acids containing more than 10 wt.-% of resin acid content. Tall oil may also be refined to tall oil fatty acids, where the resin acid content is typically less than 10 wt.-%. Suitable examples of tall oil may include, but are not limited to, SYLFAT^{™} products, SYLVATAL^{™} products, SYLVABLEND^{™} products and SYLVAROS^{™} products, all available from Kraton Corporation (USA), as well as tall oil products, such as crude tall oils and Tall Oil 1, available from UCY Energy (Germany).

The carbon black feedstock (i.e. feedstock for carbon black) may in particular comprise tall oil pitch. Tall oil pitch is obtained as a nonvolatile residue from refining by distillation of tall oil and may be mixed with fore-runs of tall oil refining. The yield of tall oil pitch in the refining process may range from about 15 to 50 wt.-%, depending for example on the quality and composition of the tall oil. Tall oil pitch typically comprises neutral substances, free acids including resin acids and fatty acids, fatty acid esters, bound and free sterols, and polymeric compounds. Additionally, metals, metal cations, inorganic and organic compounds including metal resinates and salts of fatty acids can be found in tall oil pitch. Said metal cations typically originate from wood and fertilizers. Suitable examples of tall oil pitch include, but are not limited to, SYLVABLEND^{™} products, such as SYLVABLEND FA7002, SYLVABLEND PF 40, SYLVABLEND PF 60 and SYLVABLEND SF75 all available from Kraton Corporation (USA) as well as Tall Oil 1, UCY-TOF40 and UCY-TOF60 all available from UCY Energy (Germany).

According to the present invention, the carbon black feedstock (i.e. feedstock for carbon black) can be a mixture of renewable carbon black feedstock and conventional carbon black feedstock. Conventional carbon black feedstock may be aliphatic or aromatic, saturated or unsaturated hydrocarbons or mixtures thereof, coal tar distillates, residual oils which are produced during the catalytic cracking of petroleum fractions, residual oils which are produced during olefin production through cracking of naphta or gas oil, natural gas or a mixture or combination of any of the foregoing. Accordingly, the carbon black feedstock is not limited to a specific feedstock material. The carbon black feedstock can be a liquid, a solid as well as a gas. It is preferred that the carbon black feedstock is a liquid or gas. For instance, gaseous carbon black feedstock can be an aliphatic feedstock, such as methane, ethane, acetylene, ethylene, ethane, propyne, propane propene, butadiene, butane, pentane, or a mixture thereof.

The carbon black feedstock (i.e. feedstock for carbon black) of the present invention may comprise the renewable carbon black feedstock in an amount greater than or equal to 10 wt.% based on the total weight of the carbon black feedstock. For example, the carbon black feedstock according to the present invention can comprise the renewable carbon black feedstock in an amount greater than or equal to 15 wt.%, or in an amount greater than or equal to 20 wt.%, or in an amount greater than or equal to 25 wt.%, or in an amount greater than or equal to 30 wt.%, or in an amount greater than or equal to 35 wt.%, or in an amount greater than or equal to 40 wt.%, or in an amount greater than or equal to 45 wt.%, or in an amount greater than or equal to 50 wt.%, or in an amount greater than or equal to 55 wt.%, or in an amount greater than or equal to 60 wt.%, or in an amount greater than or equal to 65 wt.%, or in an amount greater than or equal to 70 wt.%, or in an amount greater than or equal to 75 wt.%, or in an amount greater than or equal to 80 wt.%, or in an amount greater than or equal to 85 wt.%, or in an amount greater than or equal to 90 wt.%, or in an amount greater than or equal to 95 wt.%, the weight percentage being based on the total weight of the carbon black feedstock. The carbon black feedstock may comprise the renewable carbon black feedstock in an amount greater than or equal to 10 wt.-%, preferably greater than or equal to 15 wt.-%, particularly preferably greater than or equal to 25 wt.-%, more preferably greater than or equal to 50 wt.-%, even more preferably greater than or equal to 85 wt.-%, most preferably greater than or equal to 99 wt.-%, the weight percent being based on the total weight of the carbon black feedstock. The carbon black feedstock can consist of the renewable carbon black feedstock.

The carbon black feedstock (i.e. feedstock for carbon black) of the present invention may comprise tall oil pitch in an amount of greater than or equal to 5 wt.-%, such as greater than or equal to 10 wt.-%, or greater than or equal to 15 wt.-%, or greater than or equal to 20 wt.-%, or greater than or equal to 25 wt.-%, or greater than or equal to 30 wt.-%, or greater than or equal to 35 wt.-%, greater than or equal to 40 wt.-%, or greater than or equal to 45 wt.-%, or greater than or equal to 50 wt.-%, or greater than or equal to 55 wt.-%, or greater than or equal to 60 wt.-%, or greater than or equal to 65 wt.-%, or greater than or equal to 70 wt.-%, or greater than or equal to 75 wt.-%, or greater than or equal to 80 wt.-%, or greater than or equal to 85 wt.-%, or greater than or equal to 90 wt.-%, or greater than or equal to 95 wt.-%, the weight percent being based on the total weight of the carbon black feedstock. The carbon black feedstock may comprise tall oil pitch in an amount greater than or equal to 10 wt.-%, preferably greater than or equal to 15 wt.-%, particularly preferably greater than or equal to 25 wt.-%, more preferably greater than or equal to 50 wt.-%, even more preferably greater than or equal to 85 wt.-%, most preferably greater than or equal to 95 wt.-%, the weight percent being based on the total weight of the carbon black feedstock. The carbon black feedstock can consist of tall oil pitch.

The renewable carbon black feedstock of the present invention may comprise tall oil pitch in an amount of greater than or equal to 5 wt.-%, such as greater than or equal to 10 wt.-%, or greater than or equal to 15 wt.-%, or greater than or equal to 20 wt.-%, or greater than or equal to 25 wt.-%, or greater than or equal to 30 wt.-%, or greater than or equal to 35 wt.-%, or greater than or equal to 40 wt.-%, or greater than or equal to 45 wt.-%, or greater than or equal to 50 wt.-%, or greater than or equal to 55 wt.-%, or greater than or equal to 60 wt.-%, or greater than or equal to 65 wt.-%, or greater than or equal to 70 wt.-%, or greater than or equal to 75 wt.-%, or greater than or equal to 80 wt.-%, or greater than or equal to 85 wt.-%, or greater than or equal to 90 wt.-%, or greater than or equal to 95 wt.-%, the weight percent being based on the total weight of the renewable carbon black feedstock. The renewable carbon black feedstock may comprise tall oil pitch in an amount greater than or equal to 10 wt.-%, preferably greater than or equal to 15 wt.-%, particularly preferably greater than or equal to 25 wt.-%, more preferably greater than or equal to 50 wt.-%, even more preferably greater than or equal to 85 wt.-%, most preferably greater than or equal to 95 wt.-%, the weight percent being based on the total weight of the renewable carbon black feedstock. The renewable carbon black feedstock may consist of tall oil pitch.

The carbon black of the present invention can have a pMC (percent of modern carbon) of 1% or more, determined according to ASTM D6866-20 Methode B (AMS), such as 2 % or more, or 5 % or more, or 7 % or more, or 10 % or more, or 12 % or more, or 15 % or more, or 17 % or more, or 20 % or more, or 22 % or more, or 25 % or more, or 27 % or more, or 30 % or more, or 32 % or more, or 35 % or more, or 37 % or more, or 40 % or more, or 42 % or more, or 45 % or more, or 47 % or more, or 50 % or more, or 52 % or more, or 55 % or more, or 57 % or more, or 60 % or more, or 62 % or more, 65 % or more, or 67 % or more, or 70 % or more, or 72 % or more, or 75 % or more, or 77 % or more, or 80 % or more, or 82 % or more, or 85 % or more, or 87 % or more, or 90 % or more, or 92 % or more, or 95 % or more, or 97 % or more, or 99 % or more.. For each sample, a ratio of ¹⁴C/¹³C is calculated and compared to measurements made on Oxalic Acid II standard (NIST-4990C). The measured values (pMC) are corrected by d13C measured using an isotope ratio mass spectrometer (IRMS). The carbon black of the present invention can have a pMC (percent of modern carbon) of 5% or more, determined according to ASTM D6866-20 Methode B (AMS), preferably of 10 % or more, particularly preferably of 15 % or more, more preferably of 50 % or more, even more preferably of 85 % or more, most preferably of 90 % or more. The carbon black of the present invention can have a pMC (percent of modern carbon) of 100%, determined according to ASTM D6866-20 Methode B (AMS).

The temperature of the hot combustion gases in which the feedstock is injected in method step (f) and/or the temperature for the reaction in method step (g) can be 700 to 2400 °C, such as 800 to 2200 °C, 800 to 1400 °C, 1500 to 2000 °C, 1500 to 1800 °C, 900 to 1300 °C, 950 to 1400 °C, or 1000 to 1200 °C. For aliphatic feedstock materials, sustainable carbon black feedstock, renewable carbon black feedstock and/or a bio-based feedstock a temperature range of 800 to 1400 °C is preferred to prevent a fast C-C bonding cleavage. However, using hydrogen as carrier material the feedstock material can be introduced at even higher temperatures. Aromatic carbon black feedstocks, such as fossil carbon black feedstocks, can be injected in the aforementioned gases even at 2000 °C since the aromatic C-C bonding is stable enough not be thermally broken and thus, the temperature is preferably 1300 to 2400 °C and most preferably 1450 to 2400 °C.

The method step (f) can further comprise subjecting the hot reaction mixture to a plasma after the injection of the feedstock for carbon black, and preferably after raising the temperature of the feedstock up to pyrolysis temperature (and evaporation of the feedstock, if the feedstock is a liquid) such as 700 to 2100 °C as defined above. The plasma treatment of the feedstock material further increases the level of H radicals and/or H+ Ions in the hot reaction mixture and thus, increases the yield of carbon black. It should be noted that the treatment of the hot reaction mixture is applied before the formation of the carbon black, i.e. preferably before pyrolysis, nuclei formation, surface growing, and aggregation as described above. Accordingly, the plasma should be applied in a position in the reactor for producing carbon black, such as a furnace black reactor, where the feedstock is injected to the hot combustion mixture, evaporated (if liquid) and heated up to the pyrolysis temperature. In other words, the plasma should be applied in the reactor chamber after the feedstock material reaches the temperature up to the pyrolysis temperature of e.g. 700 to 2400 °C, such as 800 to 2000 °C, 800 to 1400 °C, 1500 to 2000 °C, 1500 to 1800 °C, 900 to 1300 °C, 950 to 1400 °C, or 1000 to 1200 °C (and after evaporation if the feedstock is a liquid) and particularly before the pyrolysis of the feedstock material. It is evident that a gaseous feedstock does not need to be evaporated since the gaseous feedstock after injecting to the reaction chamber is already a gas.

A plasma torch can provide the plasma for the aforementioned treatment. A plasma torch design is described in WO 1993/012633 A1. However, any means known in the art to produce a plasma can be used. The plasma can be formed by means of a plasma carrier gas which is heated by an electric arc which burns between electrodes. In a plasma zone of high temperatures are reached, from 3000°C to 20,000°C, and it is in this zone that the plasma treatment can be achieved. The plasma carrier gas can be oxygen or hydrogen. Hydrogen as plasma carrier gas is particularly preferred.

A microwave plasma can also provide the plasma for the aforementioned treatment. For instance, a microwave generator can be used that provide microwave radiation inside the reaction chamber. The hydrogen that is already present in the hot reaction mixture is then used as plasma carrier material or as gas for generating the plasma. Microwave radiation having 1 to 300 GHz can be used. Alternative, a plasma can be generated using a radio frequency power source (RF generator). According to the invention, a combustion mixture comprising oxygen-containing gas and hydrogen and/or a hot combustion mixture comprising hydrogen for producing carbon black is (are) used for producing carbon black. It is preferred that the oxygen-containing gas is O₂. Moreover, the combustion mixture preferably comprises hydrogen in molar excess with respect to oxygen that is present in the oxygen-containing gas. In other words, the molar ratio of hydrogen to oxygen should be over 1.

The hydrogen present in a reaction chamber of a carbon black reactor can be used to accelerate the pyrolysis reaction of the feedstock for carbon black. The hydrogen present in a reaction chamber of a carbon black reactor can be subjected to a plasma.

According to the invention, hydrogen can be used as carrier gas and/or fuel for producing carbon black. It is preferred that the hydrogen is used as carrier gas and fuel for producing carbon black. Hydrogen will be used as a carrier gas if the hydrogen is present in the combustion mixture in molar excess with respect to oxygen. Thus, hydrogen should be present in the hot combustion gases and the hot reaction mixture.

According to the present invention, the carbon black can be a plasma black, a gas black, a channel black, a thermal black, a lamp black or a furnace black, preferably a furnace black.

The produced carbon black can have an oil absorption number (OAN) measured according to ASTM D2414-19 of equal to or less than 80 mL/100 g. For example, the carbon black may have an OAN measured according to ASTM D2414-19 of equal to or less than 70 mL/100 g, such as of equal to or less than 60 mL/100 g, or of equal to or less than 50 mL/100 g, or of equal to or less than 45 mL/100 g, or of equal to or less than 40 mL/100 g, or of equal to or less than 37 mL/100 g. The carbon black may have an OAN measured according to ASTM D2414-19 of 19 mL/100 g or more, such as 23 mL/100 g or more, or 25 mL/100 g or more. The carbon black according to the present invention can have an OAN in a range between any of the recited lower and upper limit values. The carbon black according to the present invention may have an OAN measured according to ASTM D2414-19 in a range of from 19 to 80 mL/100 g, preferably from 19 to 70 mL/100 g, particularly preferably from 23 to 60 mL/100g, more preferably from 23 to 50 mL/100 g, even more preferably from 25 to 40 mL/100 g, most preferably from 25 to 37 mL/100 g.

The present invention is also directed to a reactor system for producing carbon black, preferably using the method according to any one of the preceding method aspects, comprising a carbon black reactor comprising (i) a combustion chamber for producing hot combustion gases by combustion of a combustion mixture comprising oxygen-containing gas and hydrogen, (ii) a conduit for supplying a second fluid to the combustion chamber, (iii) an injection means for injecting a first fluid into the combustion chamber, and (iv) a reaction chamber subsequent to the combustion chamber, comprising means to inject a feedstock for carbon black (I) into the hot combustion gases received from the combustion chamber to form carbon black, wherein the first fluid is oxygen-containing gas and the second fluid is hydrogen or the first fluid is hydrogen and the second fluid is oxygen-containing gas. Preferably, the first fluid is oxygen-containing gas and the second fluid is hydrogen. The carbon black reactor is preferably a furnace carbon black reactor.

The carbon black reactor can have a flow passage along a central longitudinal axis of the reactor and can be a furnace black reactor. The reactor comprises in the following order from upstream to downstream (flow direction) a combustion chamber, a reaction chamber and optionally a quenching chamber.

The reaction chamber is in connected with the combustion chamber so that the hot combustion gases obtained in the combustion chamber can flow into the reaction chamber. The reaction chamber can be arranged along the central longitudinal axis of the reactor. The diameter of the reaction chamber can be higher than the diameter of the constriction section of the combustion chamber so that the hot combustion gas is able to expand. The expansion section is preferably dimensioned as a cylinder and in communication with the combustion chamber, preferably in the communication with the constriction section of the combustion chamber.

The reaction chamber comprises means to inject the feedstock for carbon black into the hot combustion gases. The means to inject the feedstock can comprise a plurality of injection nozzles that are preferably arranged circumferentially with respect to the central longitudinal axis. The circumferential arrangement further improves the uniform characteristics of the carbon black since the feedstock for the carbon black can be homogenously mixed with the hot combustion gases.

The reactor system can further comprise a quenching chamber subsequent and downstream to the reaction chamber, preferably comprising means for injecting a quenching medium into quenching chamber. The quenching chamber can also be a heat exchanger or quenching boiler.

The reactor system further comprises a filter unit for separating carbon black from the hot reaction mixture and/or quenched reaction mixture to obtain carbon black and a tail gas mixture (or tail gas), wherein the filter unit is in fluid connection with the quenching chamber of the carbon black reactor.

It is intended that the reactor system comprises a quenching chamber as well as a filter unit for the separation of the carbon black and the tail gas. The tail gas can then be reprocessed in different chambers or in one chamber to separate remaining hydrogen from the tail gas that can be resupplied to the reactor system as the first or second fluid.

Thus, the reactor system can further comprise (A) a chamber for converting CO present in the tail gas mixture to CO₂, wherein said chamber is preferably connected to the filter unit for separating carbon black and/or connected to the chamber for condensing H₂O, (B) a chamber for condensing H₂O present in the tail gas mixture, wherein said chamber is preferably connected to the filter unit for separating carbon black and/or connected to the chamber for converting CO, and/or (C) a chamber for separating CO₂ and H₂ present in the tail gas mixture, wherein said chamber is preferably connected to the chamber for condensing H₂O and/or connected to the chamber for converting CO. Accordingly, the preferred order from upstream to downstream is the filter unit, (A) a chamber for converting CO present in the tail gas mixture to CO₂, (B) a chamber for condensing H₂O, and C) a chamber for separating CO₂ and H₂. As mentioned before, if it is desired to obtain a synthesis gas, (A) a chamber for converting CO present in the tail gas mixture to CO₂ is not present so that the separation chamber (C) separates H₂ and remaining CO₂ from the tail gas, wherein the H₂ portion also comprises CO and thus, a H₂/CO (H₂ and H₂O) mixture is obtained. In the case that no CO₂ is present in tail gas, i.e. the tail gas comprises CO, H₂ and H₂O, it is only necessary to filter the carbon black, condense the H₂O and the obtained mixture comprises H₂ and CO. In the aforementioned chambers or units, the separation, condensing and conversion can be achieved as described above.

The reactor system can further comprise a conduit for supplying H₂ connected with the conduit for supplying a first fluid to the combustion chamber (ii) and the chamber for separating CO₂ and H₂, or connected with the injection means for injecting a second fluid into the combustion chamber and the chamber for separating CO₂ and H₂. Accordingly, the hydrogen that is separated in the aforementioned chamber can be resupplied to the reactor system to obtain a further improved, sustainable carbon black production.

The reactor chamber (iv) can also comprise means to generate a plasma (II) in the reaction chamber. The means to generate a plasma can be a plasma torch, microwave plasma generator or a RF generator as described above. The plasma carrier gas is preferably hydrogen so that the tail gas can be easily separated. The means to generate a plasma (II) is arranged subsequent and downstream to the means to inject a feedstock for carbon black (I). The means to generate a plasma can be arranged circumferentially with respect to the reaction chamber.

The injection means is preferably a lance and extending through the conduit with a gap between the inner surface of the conduit and the outer surface of the lance defining a passageway for second fluid. The second fluid is preferably hydrogen and the first fluid are preferably the oxygen-containing gas.

The invention will now be described with reference to the accompanying figure which do not limit the scope and ambit of the invention. The description provided is purely by way of example and illustration. However, specific features exemplified in the figure can be used to further restrict the scope of the invention and claims.

Figure 1 shows a furnace carbon black reactor (100) for the production of carbon black. The furnace carbon black reactor (100) is a part of the reactor system according to the invention and the method according to the invention and can be carried out in said furnace carbon black reactor (100) of a reactor system.

The furnace carbon black reactor (100) comprises a combustion chamber (120), a reaction chamber (130), and a quenching chamber (140). Moreover, a tubular conduit (110) is connected with the combustion chamber (120). These components are arranged along the central longitudinal axis of the reactor (101) and form a flow passage. The arrows (102) indicate the flow direction of the hydrogen (second fluid) that is supplied through the tubular conduit (110) to the combustion chamber (120). In this reactor (100), the injection means is a lance (111) provided inside the tubular conduit (110). The lance (111) is arranged along the central longitudinal axis of the reactor (101). The arrow (103) indicates the flow direction of the oxygen-containing gas that is preferably oxygen (first fluid). However, it is also according to the invention that the injection means for the oxygen is arranged circumferentially with respect to the central longitudinal axis (101) of the reactor or the tubular conduit (110).

The hydrogen and the oxygen-containing gas is mixed and the fuel, i.e. hydrogen, is combusted in the combustion chamber (120). The resulting hot combustion mixture that generally comprises H₂ as the carrier gas is then transferred in the reaction chamber (130). The reaction chamber (130) comprises a plurality of feedstock injection means (131) to inject a carbon black feedstock (132) (i.e. hydrocarbon feedstock). Moreover, means for generate a plasma (133) are present in the reactor chamber (130) downstream of the feedstock injection means (131). The means for generate a plasma (133) should be positioned close to the feedstock injection means (131) so that the temperature of the feedstock is raised up to pyrolysis temperature (and evaporation of the feedstock, if the feedstock is a liquid) and not substantially pyrolyzed.

A quenching chamber (140) is arranged subsequent to the reaction chamber (130). The quenching chamber (140) comprises a plurality of injecting nozzles (134) for injecting a quenching medium (135), such as water. As described above, a heat exchanger or a quenching boiler can also be used.

Thus, the figure reveals a carbon black reactor comprising from upstream to downstream (flow direction) the following chambers: combustion chamber (120), reaction chamber (130) and quenching chamber (140).

The produced carbon black and tail gas can then be subjected to a filter unit and the hydrogen can be separated and resupplied (not shown) to the tubular conduit (110). The hydrogen can also be collected or a hydrogen CO mixture can be used as synthesis gas.

It will be appreciated that various modifications can be made, and that many changes can be made in the preferred embodiments without departing from the principle of the invention.

### ASPECTS OF THE INVENTION

1. A method for producing carbon black, preferably carried out in a reactor system according to reactor system aspects 17 to 24, preferably according to the use according to aspects 26 to 31, comprising:
   (a) injecting a first fluid with an injection means into a combustion chamber of a reactor,
   (b) supplying a second fluid through a conduit into the combustion chamber,
   (c) mixing the second fluid and the first fluid to obtain a combustion mixture,
   (d) combusting the combustion mixture in a combustion chamber to produce hot combustion gases,
   (e) receiving the hot combustion gases in a reaction chamber of the reactor subsequent to the combustion chamber,
   (f) injecting a feedstock for carbon black (or carbon black feestsock) into the hot combustion gases received from the combustion chamber to obtain a hot reaction mixture comprising the feedstock for carbon black (or carbon black feestsock), and
   (g) reacting the hot reaction mixture in the reaction chamber to obtain a hot product mixture comprising carbon black,
   wherein the first fluid is oxygen-containing gas and the second fluid is hydrogen or the first fluid is hydrogen and the second fluid is oxygen-containing gas.
2. The method according to aspect 1, wherein the first fluid is oxygen-containing gas, particularly O₂, and the second fluid is hydrogen.
3. The method according to any one of aspects 1 or 2, wherein the oxygen-containing gas is O₂ and/or wherein the wt.-% of oxygen that is present in the oxygen-containing gas is 20 to 100 wt.-%, preferably 50 to 99 wt.-%, more preferably 60 to 95 wt.-% and most preferably 70 to 90 wt.-%,
   wherein the wt.-% is based on the total weight of the oxygen-containing gas.
4. The method according to any one of the preceding method aspects,
   wherein the hydrogen that is injected in step (a) or supplied in step (b) is compressed hydrogen and the absolute pressure of the compressed hydrogen is preferably 1.1 to 2,000 bar, such as 2 to 1,000 bar, 3 to 200 bar, or 4 to 100 bar.
5. The method according to any one of the preceding method aspects,
   wherein the method further comprises the following step(s)
   (h) quenching the hot product mixture, preferably using a quenching medium, such as water, in a quenching chamber of the reactor to obtain a quenched reaction mixture,
   (i) obtaining carbon black from the hot reaction mixture and/or quenched reaction mixture and a tail gas mixture comprising H₂O, H₂, CO and CO₂,
   (j) converting CO present in the tail gas mixture to CO₂,
   (k) condensing H₂O present in the tail gas mixture,
   (I) separating CO₂ and H₂ present in the tail gas mixture, and/or
   (m) providing the separated H₂ as the first or second fluid to the combustion chamber of a reactor according to step (a) or (b).
6. The method according to any one of the preceding method aspects, wherein separated H₂ is provided to a fuel cell that provides electrical energy.
7. The method according to any one of the preceding method aspects, wherein the CO is not converted to CO₂ and during the separation of the tail gas mixture a hydrogen/CO mixture is obtained, preferably in a molar ratio of hydrogen to CO of from 5/1 to 1.5/1, such as 4/1 to 2/1.
8. The method according to any one of the preceding method aspects,
   wherein
   (i) the hot combustion gases comprise H₂O and H₂,
   (ii) the hot reaction mixture comprises H₂O, H₂ and a feedstock for carbon black,
   (iii) the hot product mixture comprises H₂O, H₂, carbon black, CO and CO₂, and/or
   (iv) the quenched reaction mixture comprises H₂O, H₂, carbon black, CO and CO₂.
9. The method according to any one of the preceding method aspects,
   wherein the carbon black feedstock is or comprises a non-aromatic feedstock, an aromatic feedstock, aliphatic feedstock, sustainable carbon black feedstock, renewable carbon black feedstock and/or a bio-based feedstock.
10. The method according to any one of the preceding method aspects,
   wherein the temperature in which the feedstock for carbon black is injected in method step (f) into the hot combustion gases and/or the temperature for the reaction in method step (g) is 700 to 2400 °C, such as 800 to 2000 °C, 800 to 1400 °C, 1500 to 2000 °C, 1500 to 1800 °C, 900 to 1300 °C, 950 to 1400 °C, or 1000 to 1200 °C.
11. The method according to any one of the preceding method aspects,
   wherein the method step (f) further comprises subjecting the hot reaction mixture to a plasma after the injection of the feedstock for carbon black, and preferably after raising the temperature of the feedstock up to pyrolysis temperature such as 700 to 2100 °C, 800 to 1400 °C and/or 1400 to 2000 °C.
12. The method according to any one of the preceding method aspects,
   wherein the hot reaction mixture comprises H radicals and/or H+ Ions derived from hydrogen, preferably generated by a plasma.
13. The method according to any one of the preceding method aspects,
   wherein the hot combustion gases comprise 2 to 90 wt.-% of hydrogen, such as 5 to 60 wt.-%, 2 to 80 wt.-%, 10 to 70 wt.-%, 30 to 50 wt.-%, or 15 to 40 wt.-%, based on the total weight of the hot combustion gases.
14. The method according to any one of the preceding method aspects, wherein the molar ratio of hydrogen to oxygen-containing gas in the combustion mixture is 100000/1 to more than 1/1, such as 10000/1 to more than 1/1, 5000/1 to 1.1/1, 2000/1 to 2/1, 30/1 to 2/1, 25/1 to 2/1, 20/1 to 2/1, or 15/1 to 2/1.
15. The method according to any one of the preceding method aspects,
   wherein the first fluid, such as the oxygen-containing gas, is injected into the combustion chamber by a lance extending through the conduit with a gap between the inner surface of the conduit and the outer surface of the lance defining a passageway for the second fluid, such as the hydrogen.
16. The method according to any one of the preceding method aspects,
   wherein
   (i) the hydrogen is preheated before entering the combustion chamber to a temperature of 500 to 2400 °C, preferably 500 to 2000 °C, 500 to 1400 °C, 500 °C to 1300 °C, 500 to 1250 °C, 500 to 1200 °C, 500 to 1100 °C, 600 to 900 °C, or 750 to 950 °C, and/or
   (ii) the oxygen-containing gas is preheated before entering the combustion chamber to a temperature of 500 to 2400 °C, preferably 500 to 2000 °C, 500 to 1400 °C, 500 °C to 1300 °C, 500 to 1250 °C, 500 to 1200 °C, 500 to 1100 °C, 600 to 900 °C, or 750 to 950 °C.
17. A reactor system for producing carbon black, preferably using the method according to any one of the preceding method aspects, comprising a carbon black reactor comprising:
   (i) a combustion chamber for producing hot combustion gases by combustion of a combustion mixture comprising oxygen-containing gas and hydrogen,
   (ii) a conduit for supplying a second fluid to the combustion chamber,
   (iii) an injection means for injecting a first fluid into the combustion chamber, and
   (iv) a reaction chamber subsequent to the combustion chamber, comprising means to inject a feedstock for carbon black (I) into the hot combustion gases received from the combustion chamber to form carbon black,
   wherein the first fluid is oxygen-containing gas and the second fluid is hydrogen or the first fluid is hydrogen and the second fluid is oxygen-containing gas.
18. The reactor system according to aspect 17, wherein the first fluid is oxygen-containing gas, preferably the oxygen-containing gas is O2, and the second fluid is hydrogen.
19. The reactor system according to any one of aspects 17 or 18, wherein the reactor further comprises a quenching chamber subsequent and downstream to the reaction chamber, preferably comprising means for injecting a quenching medium into quenching chamber.
20. The reactor system according to any one of the preceding reactor system aspects, wherein the reactor system further comprises a filter unit for separating carbon black from the hot reaction mixture and/or quenched reaction mixture to obtain carbon black and a tail gas mixture, wherein the filter unit is in fluid connection with the quenching chamber of the carbon black reactor.
21. The reactor system according to any one of the preceding reactor system aspects, wherein the reactor system further comprises:
   (A) a chamber for converting CO present in the tail gas mixture to CO₂, wherein said chamber is preferably connected to the filter unit for separating carbon black and/or connected to the chamber for condensing H₂O,
   (B) a chamber for condensing H₂O present in the tail gas mixture, wherein said chamber is preferably connected to the filter unit for separating carbon black and/or connected to the chamber for converting CO, and/or
   (C) a chamber for separating CO₂ and H₂ present in the tail gas mixture, wherein said chamber is preferably connected to the chamber for condensing H₂O and/or connected to the chamber for converting CO.
22. The reactor system according to aspect 21, wherein the reactor system further comprises a conduit for supplying H₂ connected with the conduit for supplying a first fluid to the combustion chamber (ii) and the chamber for separating CO₂ and H₂, or connected with the injection means for injecting a second fluid into the combustion chamber (iii) and the chamber for separating CO₂ and H₂.
23. The reactor system according to any one of the preceding reactor system aspects, wherein the reactor chamber (iv) comprises means to generate a plasma (II) in the reaction chamber and the means to generate a plasma (II) is arranged subsequent and downstream to the means to inject a feedstock for carbon black (I).
24. The reactor system according to any one of the preceding reactor system aspects, wherein the injection means is a lance for the first fluid and extending through the conduit with a gap between the inner surface of the conduit and the outer surface of the lance defining a passageway for the second fluid.
25. A carbon black produced according to the method according to any one of the preceding method aspects and/or using a reactor system according to any one of the preceding reactor system aspects.
26. Use of a combustion mixture comprising oxygen-containing gas and hydrogen, and/or hot combustion mixture comprising hydrogen, for producing carbon black, preferably in a method according to any one of the preceding method aspects and/or using a reactor system according to any one of the preceding reactor system aspects.
27. The use according to aspect 26, wherein hydrogen present in a reaction chamber of a carbon black reactor is used to accelerate the pyrolysis reaction of the feedstock for carbon black.
28. The use according to any one of aspects 26 or 27, wherein hydrogen present in a reaction chamber of a carbon black reactor is subjected to a plasma.
29. The use according to any one of aspects 26 to 28, wherein the amount of oxygen-containing gas, such as O₂, in the combustion mixture is used to control the amount of water in the hot combustion mixture and/or hot reaction mixture and thus, preferably control the surface properties of the produced carbon black.
30. Use of hydrogen as carrier gas and/or fuel for producing carbon black, preferably in a method according to any one of the preceding method aspects and/or using a reactor system according to any one of the preceding reactor system aspects.
31. The use according to aspect 30, wherein hydrogen is used as carrier gas, or carrier gas and fuel.

## Claims

1. A method for producing carbon black comprising:
(a) injecting a first fluid with an injection means into a combustion chamber of a reactor,
(b) supplying a second fluid through a conduit into the combustion chamber,
(c) mixing the second fluid and the first fluid to obtain a combustion mixture,
(d) combusting the combustion mixture in a combustion chamber to produce hot combustion gases,
(e) receiving the hot combustion gases in a reaction chamber of the reactor subsequent to the combustion chamber,
(f) injecting a feedstock for carbon black into the hot combustion gases received from the combustion chamber to obtain a hot reaction mixture comprising the feedstock for carbon black, and
(g) reacting the hot reaction mixture in the reaction chamber to obtain a hot product mixture comprising carbon black,
wherein the first fluid is oxygen-containing gas and the second fluid is hydrogen or the first fluid is hydrogen and the second fluid is oxygen-containing gas.

2. The method according to claim 1, wherein the first fluid is oxygen-containing gas, particularly O₂, and the second fluid is hydrogen, and/or wherein the oxygen-containing gas is O₂.

3. The method according to any one of the preceding claims, wherein the method further comprises the following step(s)
(h) quenching the hot product mixture, preferably using a quenching medium, such as water, in a quenching chamber of the reactor to obtain a quenched reaction mixture,
(i) obtaining carbon black from the hot reaction mixture and/or quenched reaction mixture to obtain a tail gas mixture comprising H₂O, H₂, CO and CO₂,
(j) converting CO present in the tail gas mixture to CO₂,
(k) condensing H₂O present in the tail gas mixture,
(I) separating CO₂ and H₂ present in the tail gas mixture, and/or
(m) providing the separated H₂ as the first or second fluid to the combustion chamber of a reactor according to step (a) or (b).

4. The method according to any one of the preceding claims, wherein
(i) the hot combustion gases comprise H₂O and H₂,
(ii) the hot reaction mixture comprises H₂O, H₂ and a feedstock for carbon black,
(iii) the hot product mixture comprises H₂O, H₂, carbon black, CO and CO₂, and/or
(iv) the quenched reaction mixture comprises H₂O, H₂, carbon black, CO and CO₂.

5. The method according to any one of the preceding claims, wherein the method step (f) further comprises subjecting the hot reaction mixture to a plasma after the injection of the feedstock for carbon black, and preferably after raising the temperature of the feedstock up to pyrolysis temperature such as 700 to 2100 °C, such as 800 to 1400 °C and/or 1400 to 2000 °C.

6. The method according to any one of the preceding claims, wherein the hot reaction mixture comprises H radicals and/or H+ Ions derived from hydrogen, preferably generated by a plasma.

7. A reactor system for producing carbon black comprising a carbon black reactor comprising:
(i) a combustion chamber for producing hot combustion gases by combustion of a combustion mixture comprising oxygen-containing gas and hydrogen,
(ii) a conduit for supplying a second fluid to the combustion chamber,
(iii) an injection means for injecting a first fluid into the combustion chamber, and
(iv) a reaction chamber subsequent to the combustion chamber, comprising means to inject a feedstock for carbon black (I) into the hot combustion gases received from the combustion chamber to form carbon black,
wherein the first fluid is oxygen-containing gas and the second fluid is hydrogen or the first fluid is hydrogen and the second fluid is oxygen-containing gas.

8. The reactor system according to claim 7, wherein the first fluid is oxygen-containing gas, preferably the oxygen-containing gas is O2, and the second fluid is hydrogen.

9. The reactor system according to claims 7 or 8, wherein the reactor system further comprises a filter unit for separating carbon black from the hot reaction mixture and/or quenched reaction mixture to obtain carbon black and a tail gas mixture, wherein the filter unit is in fluid connection with the quenching chamber of the carbon black reactor.

10. The reactor system according to any one of the preceding reactor system claims, wherein the reactor system further comprises:
(A) a chamber for converting CO present in the tail gas mixture to CO₂, wherein said chamber is preferably connected to the filter unit for separating carbon black or connected to the chamber for condensing H₂O,
(B) a chamber for condensing H₂O present in the tail gas mixture, wherein said chamber is preferably connected to the filter unit for separating carbon black or connected to the chamber for converting CO, and/or
(C) a chamber for separating CO₂ and H₂ present in the tail gas mixture, wherein said chamber is preferably connected to the chamber for condensing H₂O or connected to the chamber for converting CO.

11. The reactor system according to claim 10, wherein the reactor system further comprises a conduit for supplying H₂ connected with the conduit for supplying a first fluid to the combustion chamber (ii) and the chamber for separating CO₂ and H₂, or connected with the injection means for injecting a second fluid into the combustion chamber (iii) and the chamber for separating CO₂ and H₂.

12. The reactor system according to any one of the preceding reactor system claims, wherein the reactor chamber (iv) comprises means to generate a plasma (II) in the reaction chamber and the means to generate a plasma (II) is arranged subsequent and downstream to the means to inject a feedstock for carbon black (I).

13. A carbon black produced according to the method according to any one of the preceding method claims and/or using a reactor system according to any one of the preceding reactor system claims.

14. Use of a combustion mixture comprising oxygen-containing gas and hydrogen, and/or hot combustion mixture comprising hydrogen, for producing carbon black.

15. Use of hydrogen as carrier gas and/or fuel for producing carbon black.
